(19) Europäisches Patentamt
European Patent Office
Office européen des brevets

(11) EP 4 002 634 A1

(12) DEMANDE DE BREVET EUROPEEN

(43) Date de publication:
**25.05.2022 Bulletin 2022/21**

(21) Numéro de dépôt: **21208097.2**

(22) Date de dépôt: **12.11.2021**

(51) Classification Internationale des Brevets (IPC):
***H02J 3/32*** *(2006.01)* ***H02J 3/48*** *(2006.01)*

(52) Classification Coopérative des Brevets (CPC):
**H02J 3/32; H02J 3/48**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **17.11.2020 FR 2011786**

(71) Demandeur: **Electricité de France**
**75008 Paris (FR)**

(72) Inventeur: **ROSSÉ, Antoine**
**75014 PARIS (FR)**

(74) Mandataire: **Plasseraud IP**
**66, rue de la Chaussée d'Antin**
**75440 Paris Cedex 09 (FR)**

# (54) COMMANDE OPTIMISÉE EN PUISSANCE D'UNE BATTERIE PARTICIPANT AU RÉGLAGE PRIMAIRE DE FRÉQUENCE

(57) L'invention concerne une sélection d'une consigne de puissance (P_ref_bat) transmise à une batterie (BAT) pour un réglage primaire de fréquence d'un réseau électrique (RES). Cette batterie (BAT) est reliée au réseau électrique (RES) et participe au réglage primaire de fréquence du réseau (RES) dans lequel :
- une fréquence nominale (f_0) est fixée par un gestionnaire du réseau (GEST), et
- une fréquence (f) du réseau (RES) est mesurable à tout instant donné.

La participation de la batterie (BAT) au réglage primaire de fréquence du réseau électrique (RES) consiste à contribuer à compenser un écart de fréquence entre la fréquence nominale (f_0) et la fréquence (f) du réseau (RES) en transmettant une puissance active (P_bat) audit réseau électrique (RES). On prévoir alors de :
/a/ obtenir une mesure de la fréquence (f) du réseau (RES),
/b/ calculer au moins en fonction de l'écart de fréquence entre la fréquence mesurée (f) et la fréquence nominale, une première consigne de puissance (P_ref_brut), calculée selon un modèle dit « brut », et variant dans le temps selon une première vitesse, et une seconde consigne de puissance (P_ref_filtré), calculée selon un modèle dit « filtré », et variant dans le temps selon une deuxième vitesse inférieure à la première vitesse.

On peut alors choisir la consigne de puissance (P_ref_bat) à transmettre à la batterie (BAT).

meas. f
S1
calc. f_filtré
S11
S21
calc. P_ref_brut
calc. P_ref_filtré
S22
select.
P_ref_bat
S3
trans.
P_ref_bat
bat
S4
FIG. 3

[Fig. 4]

EP 4 002 634 A1

## Description

### Domaine technique

L'invention relève du domaine des procédés de commande en puissance de systèmes de stockages stationnaires comme les batteries et concerne plus précisément la commande de tels systèmes dans le cadre d'une participation au réglage primaire de fréquence de réseaux électriques.

### Technique antérieure

Un réseau d'électricité connaît en permanence des injections et soutirages d'énergie. Le bon fonctionnement de ces échanges d'énergie est garanti par des gestionnaires de réseau public de transport d'électricité (RTE en France) qui assurent notamment l'équilibre entre la production et la consommation d'énergie à chaque instant. L'intégration croissante de sources de production d'énergie intermittentes, c'est-à-dire dépendant d'aléas météorologiques comme les sources d'énergie solaire ou éolienne, introduit notamment une incertitude importante dans cet équilibre et de ce fait, une régulation du réseau est nécessaire pour maintenir sa stabilité.

La stabilité du réseau se traduit directement par un maintien de sa fréquence mesurée à une valeur nominale fixée. Dans le cas du réseau interconnecté européen par exemple, cette fréquence nominale vaut 50 Hz. Lorsque la fréquence du réseau européen dépasse 50 Hz, le bilan d'énergie produite sur l'énergie consommée est excédentaire tandis que lorsque la fréquence du réseau est inférieure à 50 Hz, le bilan d'énergie produite sur l'énergie consommée est déficitaire. Dans les deux cas, une correction de cet écart de fréquence est nécessaire à l'échelle de chaque réseau électrique national composant le réseau européen, pour ramener la fréquence du réseau européen à sa valeur nominale par un réglage de fréquence du réseau national, à commencer par un réglage primaire de fréquence.

Le réglage primaire de fréquence consiste à mobiliser en quelques secondes et de façon automatisée des réserves de puissance active provenant de plusieurs installations de production, ces réserves étant qualifiées de « réserves primaires » et les installations de production correspondantes de « entités de réserve ». On dit alors que ces entités de réserve participent au réglage primaire de fréquence du réseau électrique. Lorsqu'un déséquilibre (et donc un écart de fréquence) survient au sein du réseau, la mobilisation des réserves primaires doit être suffisante et assez rapide pour compenser le déséquilibre. Ces contraintes en temps de réponse et en puissance active à fournir sont imposées par les gestionnaires du réseau et les entités de réserve doivent adapter leur puissance et leur temps de réponse à ces contraintes par l'intermédiaire d'un régulateur de puissance ou de vitesse par exemple.

Les entités de réserve sont classiquement des générateurs de centrales thermiques ou hydroélectriques entres autres. L'utilisation de systèmes électrochimiques réversibles tels que des batteries dans les entités de réserve est également connue. Cependant, les contraintes en temps de réponse et en puissance active à fournir imposées par les gestionnaires de réseau conduisent classiquement les régulateurs de puissance des batteries à fixer des consignes de réponse active qui ont des conséquences néfastes sur les batteries, notamment sur leur vieillissement - ou cyclage - et/ou la gestion de leur état de charge, ce qui peut conduire à une dégradation importante et irréversible des batteries.

### Résumé

La présente divulgation vient améliorer la situation.

Il est proposé un procédé mis en œuvre par des moyens informatiques, de sélection d'une consigne de puissance transmise à au moins une batterie pour un réglage primaire de fréquence d'un réseau électrique, ladite batterie étant reliée au réseau électrique et étant apte à participer au réglage primaire de fréquence dudit réseau dans lequel :

- une fréquence nominale est fixée par un gestionnaire du réseau, et
- une fréquence du réseau est mesurable à tout instant donné.

La participation de la batterie au réglage primaire de fréquence du réseau électrique consiste à contribuer à compenser un écart de fréquence entre la fréquence nominale et la fréquence du réseau en transmettant une puissance active audit réseau électrique.
Le procédé comporte les étapes :

/a/ obtenir une mesure de la fréquence du réseau,

/b/ calculer au moins en fonction de l'écart de fréquence entre la fréquence mesurée et la fréquence nominale :

- une première consigne de puissance, calculée selon un modèle dit « brut », et variant dans le temps selon une première vitesse,

- et au moins une seconde consigne de puissance, calculée selon un modèle dit « filtré », et variant dans le temps selon une deuxième vitesse inférieure à la première vitesse,

la consigne de puissance à transmettre à la batterie étant ainsi sélectionnable dans un ensemble comportant au moins une consigne calculée selon le modèle brut et une consigne calculée selon le modèle filtré, la batterie transmettant au réseau électrique la puissance active définie par la consigne de puissance sélectionnée parmi ledit ensemble.

En effet, lorsqu'un écart de fréquence entre la fréquence mesurée du réseau et la fréquence nominale (égale à 50 Hz en Europe) survient sur un réseau électrique, le mécanisme d'ajustement des entités de réserve primaires est automatiquement déclenché et chaque entité de réserve primaire ajuste une puissance active à transmettre au réseau électrique par l'intermédiaire d'organes de contrôle régulant les vitesses de réponses respectives des entités de réserve primaires. Cette puissance active correspond à une puissance de consigne calculée et transmise à chaque entité de réserve primaire par un organe de contrôle de chaque entité.

Dans le procédé décrit, au moins une entité de réserve primaire considérée inclut une batterie. Lors du déclenchement du réglage primaire de fréquence du réseau, la batterie participe au réglage primaire de fréquence. L'organe de contrôle de la batterie calcule alors une consigne de puissance à transmettre à la batterie, cette consigne correspondant à la réponse en puissance active que doit fournir la batterie. Le calcul de deux consignes de puissance active ayant des vitesses de variation dans le temps différentes permet de distinguer une consigne dite rapide d'une consigne dite lente, la consigne rapide correspondant à la consigne de puissance ayant la vitesse de variation dans le temps la plus grande parmi les deux consignes, à savoir la première consigne de puissance calculée selon le modèle brut. La sélection d'une consigne de puissance à transmettre à la batterie parmi au moins une consigne lente et une consigne rapide offre ainsi une modularité dans la réponse en puissance de la batterie.

En effet, lors de fournitures d'énergie au réseau électrique, notamment dans le contexte du réglage primaire de fréquence, une batterie réalise des cycles de charge et/ou de décharge qui peuvent avoir un impact important sur l'état de la batterie en termes de vieillissement de la batterie et d'état de charge notamment. Un rythme rapide ou lent de charge ou de décharge de la batterie peut alors avoir une influence sur les performances de la batterie. En effet, selon des modes de fonctionnement de la batterie, il est parfois plus bénéfique pour l'état de la batterie de fournir une réponse en puissance lente tandis qu'il est parfois plus bénéfique pour l'état de la batterie de fournir une réponse rapide. Le procédé vise par conséquent à calculer et à sélectionner, de façon dynamique, des consignes de puissance adaptées au mode de fonctionnement et à l'état de la batterie, de sorte à optimiser son utilisation.

Les caractéristiques exposées dans les paragraphes suivants peuvent, optionnellement, être mises en œuvre, indépendamment les unes des autres ou en combinaison les unes avec les autres :

Dans un mode de réalisation, le calcul de la première consigne de puissance et le calcul de la deuxième consigne de puissance dépendent au moins d'une consigne nominale de puissance de la batterie.

En effet, le calcul des consignes de puissance dépend d'une consigne de puissance par défaut, appelée « consigne nominale de puissance » ou « offset » de la batterie, qui correspond à une puissance transmise par défaut par la batterie, indépendamment de tout ajustement de puissance lié au réglage primaire de fréquence. Cette puissance est intégrée au fonctionnement de la batterie. Dans le mode de réalisation décrit, la consigne nominale de puissance est reliée à la gestion de son état de charge. En variante, la consigne nominale de puissance peut également être une consigne de puissance constante sur une fenêtre de temps donnée, dans le cadre d'un service d'arbitrage de la batterie (c'est-à-dire des achats et ventes d'énergie sur des marchés) exploitant la volatilité des prix de l'énergie sur ces marchés par exemple. La consigne nominale de puissance peut également être liée à une consigne de pilotage centralisé, notamment dans le cas où la batterie fait partie d'une agrégation (ou pool). Une consigne nominale de puissance nulle signifie que, hors contexte de réglage primaire de fréquence du réseau, la batterie n'échange aucune énergie avec le réseau. Une consigne nominale positive (respectivement négative) de puissance signifie que la batterie fournit (respectivement reçoit) par défaut, de l'énergie au réseau lorsque ce dernier est à l'équilibre.

Dans un mode de réalisation, la sélection entre la première consigne de puissance et la deuxième consigne de puissance est fonction d'au moins un état de charge en cours de la batterie, pour une minimisation de cyclage de la batterie.

En effet, le procédé décrit vise notamment à limiter le vieillissement de la batterie, qui correspond à une dégradation irréversible de ses performances. Le vieillissement dépend de plusieurs paramètres d'utilisation de la batterie comme la température ou le cyclage. Le cyclage correspond à une succession de cycles de charge puis décharge de la batterie. La sélection de consignes de puissance vise notamment à minimiser le vieillissement de la batterie en évitant des cycles de charge puis décharge inutiles pour la batterie.

Dans le cadre de la présente description, le procédé permet de prendre notamment en compte un état de charge de la batterie, correspondant à une valeur instantanée de la quantité d'énergie disponible et stockée par la batterie pour le réglage primaire de fréquence. La quantité maximale d'énergie disponible d'une batterie correspond à sa capacité utile. Une bonne gestion de l'état de charge de la batterie permet d'optimiser les performances de cette dernière dans le cadre de sa participation au réglage primaire de fréquence.

Dans un mode de réalisation, le procédé comprend après l'étape /b/ :

/c/ obtenir une mesure d'un état de charge en cours de la batterie et comparer ladite mesure :

/c1/ à un premier seuil d'état de charge pour déterminer si la batterie est dans un mode de surcharge si ladite mesure est supérieure au premier seuil d'état de charge,

/c2/ à un second seuil d'état de charge, inférieur au premier seuil d'état de charge, pour déterminer si la batterie est dans un mode de sous-charge si ladite mesure est inférieure au second seuil d'état de charge, et

/d1/ si la condition /c1/ est remplie, la consigne de puissance transmise à la batterie sélectionnée est la consigne de puissance maximale entre la première consigne de puissance et la deuxième consigne de puissance,

/d2/ si la condition /c2/ est remplie, la consigne de puissance transmise à la batterie sélectionnée est la consigne de puissance minimale entre la première consigne de puissance et la deuxième consigne de puissance.

En effet, une gestion optimale de l'état de charge d'une batterie participant au réglage primaire de fréquence du réseau consiste à éviter un fonctionnement de la batterie dans des modes de sous-charge ou au contraire de surcharge. Le seuil haut d'état de charge d'une batterie est une valeur paramétrable de la batterie et peut être compris entre 50 % et 90 % de la capacité utile de la batterie et, de façon similaire, un seuil bas d'état de charge est compris entre 10 % et 50 % de la capacité utile de la batterie. L'objectif de tels seuils d'état de charge est d'éviter l'utilisation de la batterie dans des valeurs extrêmes d'état de charge (les valeurs extrêmes étant entendues ici comme des valeurs supérieures au seuil haut d'état de charge ou inférieures au seuil bas d'état de charge), de sorte à assurer une bande d'énergie suffisante à la batterie pour le réglage primaire de fréquence du réseau. De ce fait, les valeurs des seuils d'état de charge sont choisies selon un dimensionnement souhaité de la bande d'énergie mise à disposition du réglage primaire par la batterie. Une utilisation optimisée de la batterie dans ce contexte consiste notamment à maintenir l'état de charge de la batterie entre le seuil haut et le seuil bas d'état de charge, dans un mode de fonctionnement dit nominal.

Dans un mode de réalisation, le procédé comprend après l'étape /b/ :

/e/ si la première consigne de puissance calculée à l'étape /b/ est nulle, la consigne de puissance sélectionnée pour être transmise à la batterie est nulle,

/f/ si la première consigne de puissance calculée à l'étape /b/ est négative, comparer la première consigne de puissance et la deuxième consigne de puissance et identifier une consigne de puissance maximale P1 entre ces deux consignes et :

/f1/ si P1 est négative, la consigne de puissance sélectionnée pour être transmise à la batterie est P1,

/f2/ sinon, la consigne de puissance sélectionnée pour être transmise à la batterie est nulle, /g/ si la première consigne de puissance calculée à l'étape /b/ est positive, comparer la première consigne de puissance et la deuxième consigne de puissance et identifier une consigne de puissance minimale P2 entre ces deux consignes et :

/g1/ si P2 est négative, la consigne de puissance sélectionnée pour être transmise à la batterie est nulle,

/g2/ sinon, la consigne de puissance sélectionnée pour être transmise à la batterie est P2.

En effet, un tel procédé offre des critères de sélection de la consigne de puissance à transmettre à la batterie parmi au moins une première consigne de puissance et une deuxième consigne de puissance calculées, de sorte à minimiser le vieillissement de la batterie.

Dans un mode de réalisation, le procédé comprend après l'étape /c/ :

/d3/ si aucune des conditions /c1/ et /c2/ n'est remplie, mettre en œuvre les étapes /e/, /f/ et /g/ pour sélectionner la consigne de puissance à transmettre à la batterie.

En effet, dans le cas où la batterie est dans un mode de fonctionnement nominal, la gestion de l'état de charge de la batterie est déjà optimisée. La sélection d'une consigne de puissance à transmettre à la batterie parmi les deux consignes de puissances calculées peut alors viser à minimiser le vieillissement de la batterie.

Dans un mode de réalisation, la puissance active transmise par la batterie au réseau électrique est inférieure ou égale à une puissance maximale de réserve primaire de ladite batterie, et le modèle filtré dépend de règles prédéterminées et fonctions au moins du temps, lesdites règles comportant :

- lorsque l'écart de fréquence entre la fréquence du réseau et la fréquence nominale du réseau dépasse un seuil de fréquence à un instant t, la consigne de puissance transmise à la batterie sélectionnée doit atteindre 50% de la puissance maximale de réserve primaire de la batterie au plus tard à un premier seuil de durée après l'instant t, et

- lorsque l'écart entre la fréquence du réseau et la fréquence nominale du réseau dépasse le seuil de fréquence à un instant t, la consigne de puissance transmise à la batterie sélectionnée doit atteindre 100% de la puissance maximale de réserve primaire de la batterie au plus tard à un second seuil de durée après l'instant t.

De plus, la deuxième consigne de puissance calculée selon le modèle filtré répond à des tolérances en temps et en puissance que définissent lesdites règles prédéterminées.

En effet, la réponse en puissance active d'une batterie participant au réglage primaire de fréquence du réseau est soumise à des règles prédéterminées, ces règles concernant notamment le délai d'activation de la puissance active de la batterie, qui correspond au temps pris par une batterie pour ajuster sa réponse au réglage primaire de fréquence ainsi que le délai d'activation total de la puissance active de la batterie, qui correspond au temps pris par une batterie pour fournir la puissance maximale mise à disposition du réglage primaire de fréquence, cette puissance étant qualifiée de « puissance maximale de réserve primaire » de la batterie. Ces règles sont fixées par le gestionnaire d'énergie du réseau et dans le cadre de ce mode de réalisation, du gestionnaire d'énergie français RTE. Toute consigne de puissance potentiellement transmise à la batterie, incluant donc la première et la deuxième consignes de puissance calculées, doivent respecter ces règles.

Dans un mode de réalisation, le modèle filtré est défini par une fonction de filtrage d'ordre un caractérisée par une constante de temps T. La seconde consigne de puissance est alors calculée à un instant donné à partir de l'image de la fréquence du réseau, mesurée audit instant donné par ladite fonction de filtrage, la deuxième vitesse de variation dans le temps de la seconde consigne de puissance dépendant ainsi de la constante de temps T de ladite fonction de filtrage.

En effet, le modèle filtré repose sur une transformation de la fréquence telle que mesurée sur le réseau. Cette transformation correspond à l'application d'un filtrage de la fréquence, ce filtrage pouvant être un filtre d'ordre un caractérisé par une constante de temps positive T. En variante, un filtre de type « moyenne glissante » caractérisé par une fenêtre de temps Tm peut être utilisé. Le filtrage de la fréquence conduit, dans le modèle filtré, à une consigne de puissance ayant une vitesse de variation plus faible que pour une consigne de puissance calculée selon le modèle brut.

Dans un mode de réalisation, le modèle de filtre est défini par une fonction de filtrage comportant une limitation de rampe, ladite fonction de filtrage étant caractérisée par une pente de raideur R. La seconde consigne de puissance est alors calculée à un instant donné à partir de l'image de la fréquence du réseau, mesurée audit instant donné par ladite fonction de filtrage, la deuxième vitesse de variation dans le temps de la seconde consigne de puissance dépendant ainsi de la raideur R de la pente de ladite fonction de filtrage.

La fonction de filtrage peut présenter notamment une limitation de rampe permettant d'obtenir une consigne de puissance calculée selon le modèle filtré ayant une vitesse de variation plus faible que pour une consigne de puissance calculée selon le modèle brut.

Dans un mode réalisation, la constante de temps T et/ou la raideur R de la pente sont déterminées de sorte que la seconde consigne de puissance réponde aux tolérances en temps et en puissance que définissent lesdites règles prédéterminées.

En effet, les règles prédéterminées imposent en particulier une vitesse de variation minimale de la consigne de puissance transmise à toute entité de réserve participant au réglage primaire de fréquence. La fonction de filtrage utilisée dans le contexte du modèle filtré est donc déterminée de sorte que la consigne de puissance calculée selon ce modèle filtré satisfait toujours les règles prédéterminées imposées par RTE.

Selon un autre aspect, il est proposé un dispositif de régulation de la puissance active d'une batterie transmise à un réseau électrique pour une participation à un réglage primaire de fréquence dudit réseau par au moins ladite batterie, ledit dispositif comportant un circuit de traitement agencé pour la mise en œuvre du procédé selon l'une des revendications précédentes.

Le calcul d'une consigne de puissance à transmettre à une batterie participant au réglage primaire de fréquence du réseau est effectué par un organe de contrôle de la batterie. Cet organe de contrôle correspond classiquement à un régulateur de puissance. En variante, le dispositif de régulation de la puissance active de la batterie peut correspondre à un onduleur ou à tout autre organe de gestion de l'énergie de la batterie. L'organe de contrôle est agencé pour déclencher le calcul de consignes de puissances à transmettre à la batterie dans le cadre du réglage primaire de fréquence, par exemple par obtention de la fréquence mesurée du réseau par pas de temps et par détection automatique d'un écart de fréquence avec la fréquence nominale du réseau.

L'organe de contrôle de la batterie comprend a minima un processeur et une mémoire. La fonction de filtrage, la consigne de puissance nominale et les contraintes imposées aux consignes de puissance par les règles prédéterminées sont entre autres, stockées en mémoire de l'organe de contrôle. Le calcul des première et deuxième consignes de puissance, l'application des critères de sélection visant à optimiser l'état de charge et/ou le vieillissement de la batterie et la sélection de la consigne de puissance transmise à la batterie sont entre autres effectués par le processeur de l'organe de contrôle.

Selon un autre aspect, il est proposé un programme informatique comportant des instructions pour la mise en œuvre du procédé tel que décrit précédemment, lesdites instructions étant exécutées par un processeur d'un circuit de traitement.

**Brève description des dessins**

D'autres caractéristiques, détails et avantages apparaîtront à la lecture de la description détaillée ci-après, et à l'analyse des dessins annexés, sur lesquels :

**Fig. 1**

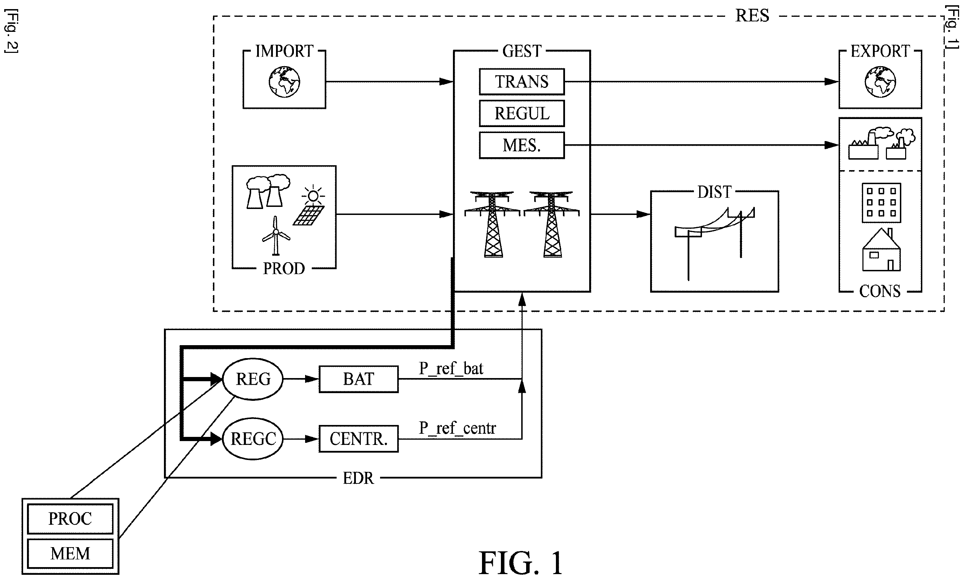

[Fig. 1] montre un contexte général de l'invention selon un mode de réalisation.

**Fig. 2**

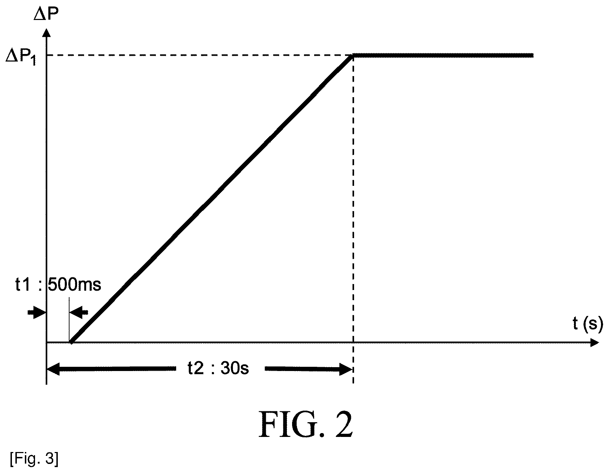

[Fig. 2] montre une courbe de réponse en puissance active attendue pour un réglage primaire de fréquence.

**Fig. 3**

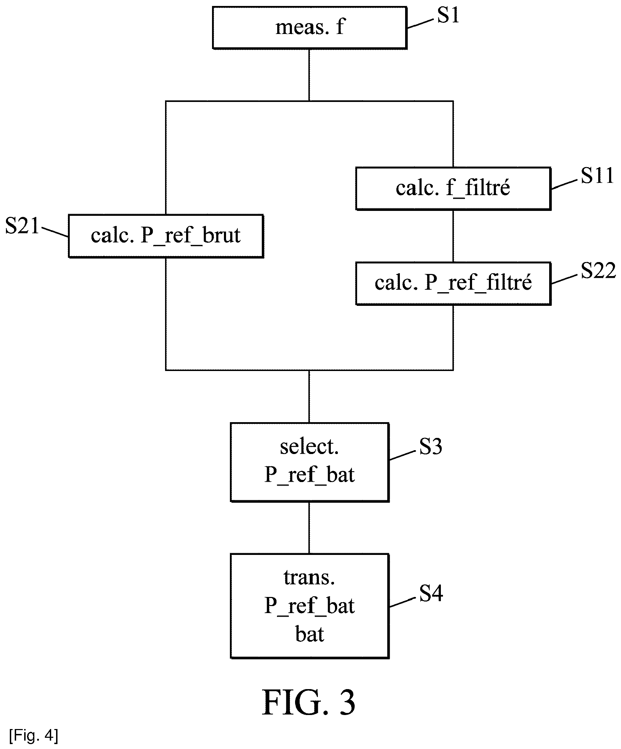

[Fig. 3] montre une mise en œuvre de l'invention selon un mode de réalisation.

**Fig. 4**

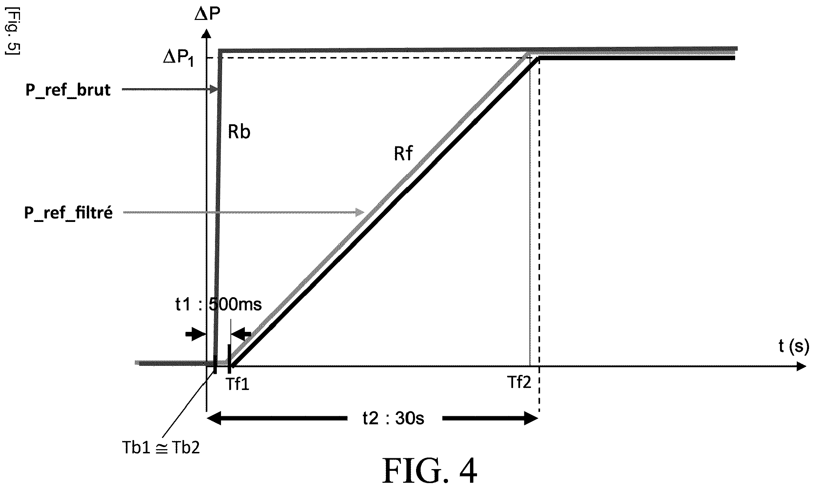

[Fig. 4] montre un graphique avec deux consignes de puissance transmissibles à une batterie selon un mode de réalisation de l'invention.

**Fig. 5**

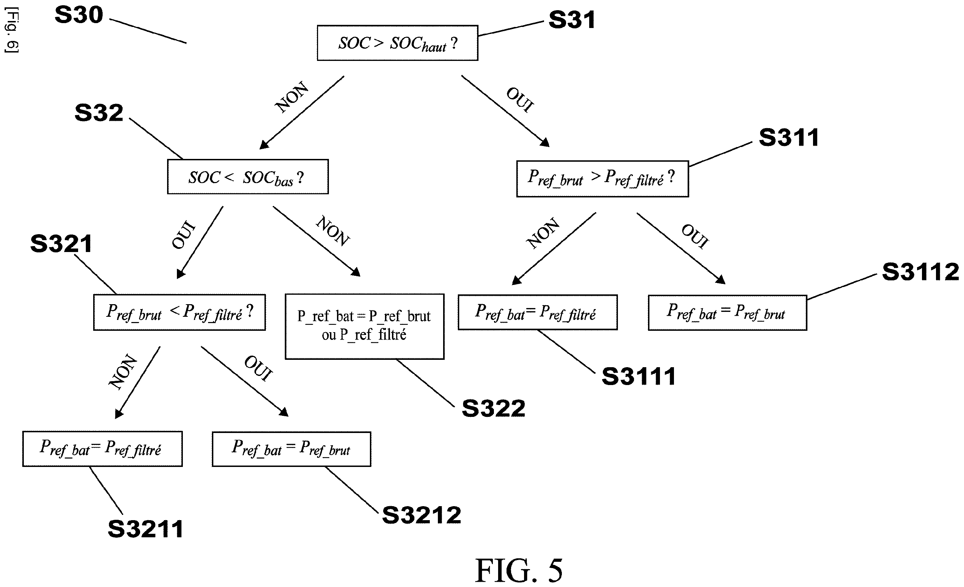

[Fig. 5] montre un algorithme de sélection d'une consigne de puissance à transmettre à une batterie selon un mode de réalisation de l'invention.

**Fig. 6**

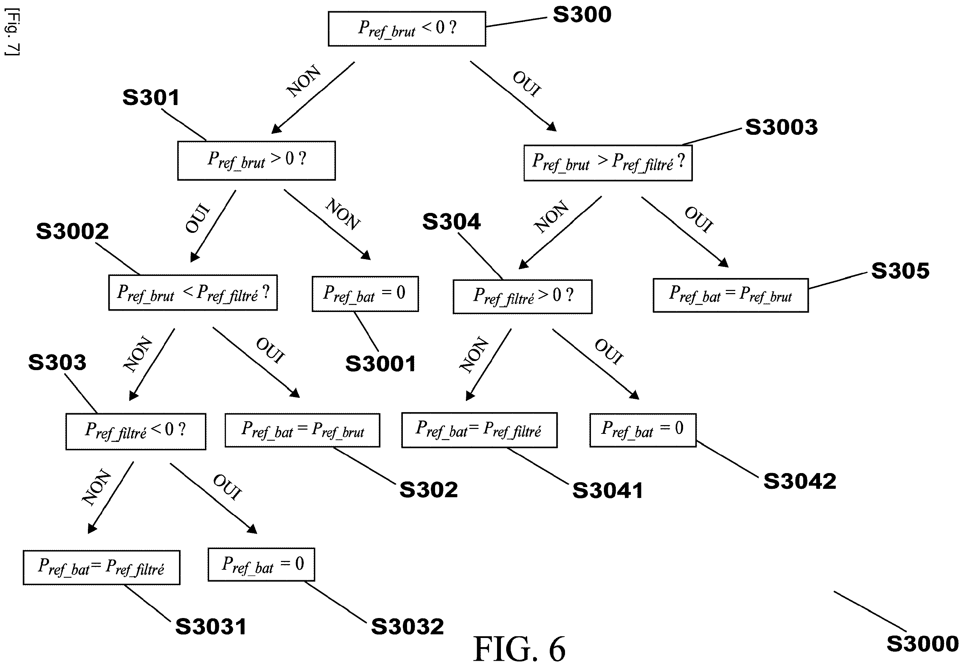

[Fig. 6] montre un algorithme de sélection d'une consigne de puissance à transmettre à une batterie selon un mode de réalisation de l'invention.

**Fig. 7**

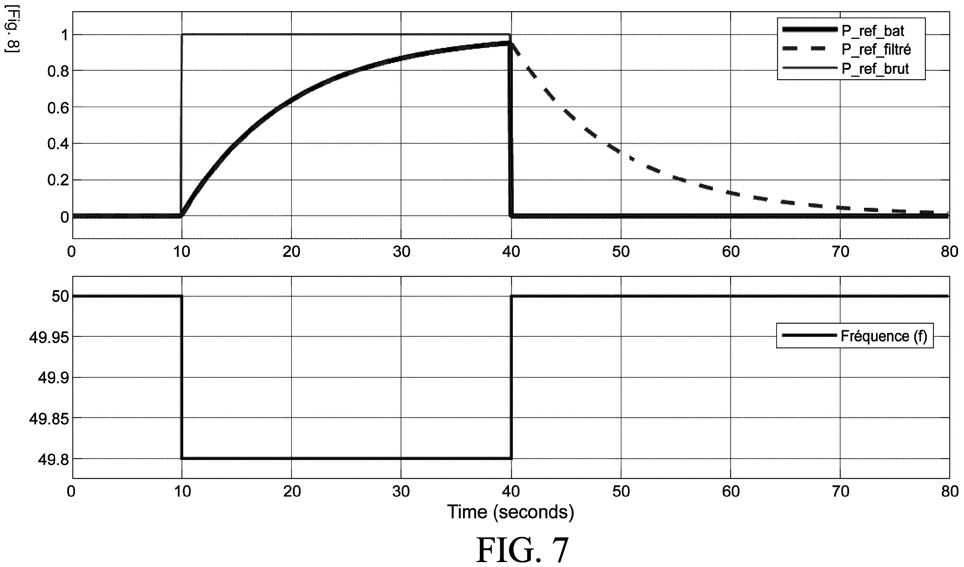

[Fig. 7] montre une réponse en puissance d'une batterie selon un mode de réalisation de l'invention.

**Fig. 8**

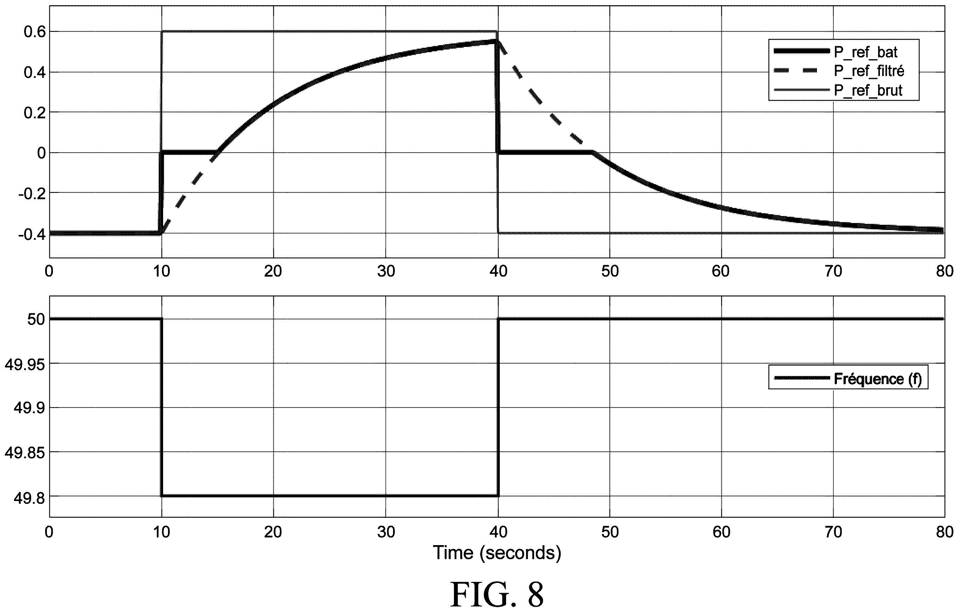

[Fig. 8] montre une réponse en puissance d'une batterie selon un mode de réalisation de l'invention.

**Description des modes de réalisation**

Il est maintenant fait référence à la figure 1. La figure 1 représente un réseau électrique RES pour un territoire national donné, composé notamment d'un réseau de distribution d'électricité DIST, de sources de production d'énergie PROD et IMPORT, d'entités de consommation d'énergie CONS et EXPORT, d'un gestionnaire d'énergie GEST et d'un ensemble d'installations (ou entités de réserve) EDR participant au réglage primaire de fréquence du réseau RES. La présente description se place dans le cadre d'un réseau électrique national RES intégré au système électrique européen, dans lequel les pays européens sont interconnectés au sein d'un seul et même système électrique qui définit une zone dite « synchrone ». Chaque territoire national comprend plusieurs points d'interconnexion électrique gérés par un gestionnaire d'énergie national GEST permettant notamment des échanges d'énergie entre le réseau électrique national RES et celui des autres pays synchronisés.

Les sources de production d'énergie PROD et IMPORT d'un tel réseau électrique RES peuvent être distinguées, pour un réseau national RES donné, entre installations de production nationales ou locales PROD injectant directement de l'énergie sur le réseau national RES et énergie importée IMPORT via les points d'interconnexion électrique du pays. Les installations de production PROD sont des centrales de production nucléaire, hydrauliques, thermiques et/ou d'énergies renouvelables (comme le biomasse ou l'éolien entre autres). Les entités de consommation CONS et EXPORT d'un tel réseau électrique RES peuvent également être distinguées, pour un territoire national donné, entre installations de consommation locale CONS qui consomment directement l'énergie fournie par les sources productrices PROD et IMPORT du système RES et énergie exportée EXPORT vers d'autres réseaux nationaux via les points d'interconnexion électrique du pays. Les installations de consommation locale CONS peuvent correspondre à des installations de consommation pour les particuliers (alimentation électrique des habitations), pour les entreprises (alimentation électrique des locaux professionnels) ou encore pour les industries (alimentation des centrales, usines entre autres).

Le transport et la distribution de l'énergie produite par les sources de production PROD et IMPORT vers les entités de consommation CONS et EXPORT sont assurés par le gestionnaire d'énergie GEST et le réseau de distribution électrique DIST. Plus précisément, le gestionnaire d'énergie GEST assure tout d'abord un rôle de transport d'énergie depuis les installations de production PROD sur des lignes à très haute tension du réseau jusqu'au réseau de distribution DIST, qui est chargé de distribuer cette énergie à moyenne et basse tension aux consommateurs particuliers et professionnels CONS. Le gestionnaire d'énergie GEST assure directement la distribution de l'énergie électrique sous haute tension aux consommateurs industriels. Le gestionnaire d'énergie GEST est également chargé des transports d'énergie dans le cadre d'importation IMPORT et/ou d'exportation EXPORT d'électricité via les points d'interconnexion électrique du gestionnaire. Outre sa fonction de transport d'énergie TRANSP, le gestionnaire d'énergie GEST a un rôle de régulation REGUL de l'énergie sur le territoire national, de sorte à assurer notamment une sûreté du système électrique et un équilibre entre production et consommation à l'échelle nationale, notamment par une surveillance et une prévision de l'état du réseau RES via l'obtention de mesures MES sur le réseau. Dans le cas du territoire national français en métropole, le gestionnaire d'énergie est le Réseau de Transport d'Électricité (RTE).

Parmi ces mesures MES, le gestionnaire d'énergie GEST contrôle notamment la fréquence f du réseau RES, qui est une valeur commune à tous les pays interconnectés en courant alternatif sur la zone synchrone. La fréquence f du réseau RES reflète directement la présence d'un équilibre ou non entre l'énergie produite et l'énergie consommée sur une même zone. Pour le réseau européen, une fréquence nominale à laquelle le réseau est à l'équilibre correspond à $f_0 = 50$ Hz. En variante, en Amérique du Nord, la fréquence nominale vaut 60 Hz. Ainsi, lorsque la fréquence f mesurée sur le réseau RES traduit une variation positive de la fréquence f par rapport à la fréquence nominale $f_0$ (autrement dit $f - f_0 > 0$), cela signifie que l'énergie produite excède l'énergie consommée sur le réseau. À l'inverse, lorsque la fréquence f mesurée sur le réseau RES traduit une variation négative de la fréquence f par rapport à la fréquence nominale $f_0$ (autrement dit $f - f_0 < 0$), cela signifie que l'énergie consommée excède l'énergie produite sur le réseau. Dans les deux cas, le gestionnaire d'énergie détecte un déséquilibre entre la fréquence mesurée f et la fréquence nominale $f_0$ du réseau RES et un mécanisme d'ajustement en plusieurs phases est déclenché.

Lorsque les mesures MES obtenues sur les échanges d'énergie au sein du réseau RES permettent au gestionnaire d'énergie GEST de détecter un écart de fréquence, une première régulation est automatiquement déclenchée en quelques secondes pour ajuster une puissance active transmises au réseau RES par les entités de réserve EDR, afin de ramener la fréquence f mesurée à la fréquence nominale $f_0$ et donc de rééquilibrer le réseau RES. Cette première régulation automatique correspond au réglage primaire de fréquence. Les entités de réserve EDR sont classiquement des installations de production CENTR nationales ou locales PROD ou encore des installations de production d'énergie importée IMPORT. Les entités de réserve EDR peuvent donc être confondues avec des sources de production PROD du réseau RES. Dans le cadre de la présente description, parmi ces entités de réserve EDR, on trouve également au moins une batterie BAT. Chaque entité de réserve EDR possède une réserve de puissance active qui représente un pourcentage de la puissance totale produite par l'installation électrique FCR, cette réserve étant qualifiée de « réserve primaire ». L'entité de réserve EDR peut alors compenser tout écart de fréquence sur le réseau par ajustement de la puissance active transmise au réseau RES avec cette réserve primaire. L'ajustement des réserves primaires dans le cadre du réglage primaire de fréquence suit des règles précises qui seront détaillées dans la description de la figure 2. Le réglage primaire impose une réponse en puissance active rapide et suffisante pour une première compensation du déséquilibre du réseau RES. De plus, chaque entité de réserve EDR est constituée d'une ou de plusieurs unités de réserve. Dans le mode de réalisation décrit, l'entité de réserve EDR comprend au moins une unité correspond à une batterie BAT. L'entité de réserve EDR peut compter une ou plusieurs batteries uniquement ou, dans le cas d'une entité de réserve hybride (ou « agrégat »), des batteries couplées à des sources de production conventionnelles comme des centrales hydrauliques par exemple. Par conséquent, pour une entité de réserve EDR donnée, chaque unité de l'entité de réserve EDR reçoit une consigne d'un organe de contrôle REG1 ou REGC régulant la vitesse et la valeur de la puissance active $P_{ref_bat}$ et $P_{ref_centr}$ que chaque unité doit fournir au réseau d'électricité RES dans le cadre de sa participation au réglage primaire de fréquence au sein de l'entité de réserve EDR.

Il est maintenant fait référence à la figure 2. La figure 2 représente les tolérances en temps et en puissance de la réponse active à fournir par toute entité de réserve EDR participant au réglage primaire de fréquence du réseau électrique en Europe et contenant au moins un dispositif de stockage tel qu'une batterie BAT. Dans la suite de la description de la figure 2, on considère une entité de réserve EDR correspondant à une batterie. La description qui suit s'applique cependant à un agrégat ou un ensemble de batteries formant une entité de réserve EDR.

L'entité de réserve EDR possède une capacité utile, exprimée en MW.h, correspondant à la quantité d'énergie que peut fournir l'entité de réserve EDR sans se détériorer. On note P_max la puissance maximale correspondant à cette capacité utile et exprimée en MW. Cette puissance maximale est notée P_max_bat dans le cas d'une unité de réserve EDR correspondant à une batterie. Chaque entité de réserve EDR possède également une puissance maximale de réserve primaire, notée RP max correspondant à la puissance maximale dédiée par l'entité de réserve EDR pour le réglage primaire de fréquence. La puissance maximale de la réserve primaire est notée RP_max_bat dans le cas d'une unité de réserve correspondant à une batterie BAT. En pratique, pour une entité de réserve EDR donnée, la puissance maximale de réserve primaire RP_max est inférieure à la puissance maximale P_max liée à la capacité utile de l'entité de réserve EDR, notamment de sorte à conserver une marge d'énergie de l'entité de réserve EDR pour son fonctionnement hors contexte de réglage primaire.

Les caractéristiques de la réponse à une variation de fréquence du réseau RES par l'entité de réserve EDR respectent notamment un délai d'activation, une durée de maintien de fourniture de la réserve primaire ainsi qu'une proportion de puissance active à fournir. Ces règles sont imposées en France par le Réseau de Transport d'Électricité (RTE) qui est le gestionnaire d'énergie français dès lors qu'un écart de fréquence supérieur à un seuil est détecté sur le réseau RES. La figure 2 résume ces règles par une courbe représentant la tolérance en délais d'activation de l'entité de réserve EDR à un échelon de fréquence donné. L'axe des abscisses correspond au temps de réponse donné en secondes (s) et l'axe des ordonnées correspondant à la réponse en puissance active à fournir par l'entité de réserve EDR considérée, donnée en mégawatts (MW), selon les règles de RTE sur le réglage primaire de fréquence du réseau européen. La réponse en puissance active sur l'axe des ordonnées est définie dans la présente description comme une différence de puissance $\Delta P$ en valeur absolue entre la puissance active à fournir par l'entité de réserve EDR à un instant donné et la puissance fournie au réseau par défaut P_default par l'entité de réserve EDR, hors de tout contexte de réglage de fréquence. En variante, la puissance à fournir par l'entité de réserve EDR peut être exprimée sur l'axe des ordonnées par une valeur non différentielle, indiquant la puissance effective fournie par l'entité de réserve EDR à un instant donné par exemple.

L'activation de la réserve primaire de l'entité de réserve EDR est effective dès qu'un écart de fréquence est détecté entre la fréquence f mesurée du réseau RES et la fréquence nominale du réseau f_0 = 50 Hz. Une activation totale de la réserve primaire de l'entité de réserve EDR est effective dès que cet écart de fréquence dépasse un certain seuil, l'activation totale de la réserve correspondant à la fourniture de la puissance maximale (ou totale) de la réserve primaire RP_max. Dans le cadre du réseau européen et de la réglementation de RTE, ce seuil de fréquence est égal à 200 mHz. Ainsi, lorsque la fréquence mesurée du réseau f s'écarte de 200 mHz ou plus de la fréquence nominale f_0, égale à 50 Hz pour le réseau européen, la réponse en puissance de l'entité de réserve EDR suit une dynamique temporelle minimale imposée par la ligne pleine de la courbe de réponse de la figure 2. Dans le cas d'un écart de fréquence non nul et inférieur à 200 mHz, l'activation de la réserve primaire de l'entité de réserve EDR est effectuée de façon proportionnelle à l'écart de fréquence. Par exemple, pour un écart de fréquence de 100 mHz, une activation de la moitié de la réserve primaire de l'entité de réserve EDR (soit RP_max/2) est attendue. La figure 2 présente le cas où l'écart de fréquence observé est supérieur à 200 mHz et appelle à une activation totale de la réserve primaire de l'entité de réserve EDR considérée.

La figure 2 représente l'allure minimale attendue d'une réponse en puissance active d'une entité de réserve EDR telle qu'une batterie BAT ou un agrégat participant au réglage primaire de fréquence du réseau RES, dans le cas d'un écart de fréquence supérieur ou égal à 200 mHz entre la fréquence f mesurée du réseau RES et la fréquence nominale du réseau f_0 = 50 Hz. Sur la figure 2, on considère t = 0 s le moment où survient un événement d'un écart de fréquence au sein du réseau RES et déclenchant automatiquement le mécanisme de réglage primaire de fréquence chez l'entité de réserve EDR considérée. À l'instant t = 0 s (et aux instants précédant l'événement, non représentés sur la figure 2), $\Delta P$ est a priori nul puisque l'entité de réserve EDR fournit toujours au réseau RES une puissance active P_default par défaut et non ajustée.

Un délai d'activation d'une entité de réserve EDR est défini comme le délai, en secondes, pris par l'entité de réserve EDR avant de fournir une réponse en puissance active ajustée au réglage primaire de fréquence. La première règle imposée par RTE est le délai d'activation toléré (t1) de la réserve primaire, indiquant que le délai d'activation d'une entité de réserve EDR ne peut pas dépasser 0,5 s sans justification technique spécifique. L'idée est en effet de ne pas retarder indûment le délai d'activation de la réponse de l'entité de réserve EDR. La première partie de la courbe correspond à une phase linéaire ascendante et se déroule entre t1 = 0,5 s et t2 = 30 s. Entre t1=0,5 s et t2 = 30 s, l'entité de réserve doit fournir une réponse en puissance active croissante et notamment de sorte à fournir la totalité de sa réserve primaire de puissance égale à RP_max au plus tard à t2 = 30 s. Autrement, dit, au plus tard trente secondes après la survenance d'un écart de fréquence de plus de 200 mHz, toute entité de réserve EDR participant au réglage primaire de fréquence doit avoir fourni la totalité de sa puissance de réserve primaire RP_max. On appelle « délai d'activation total » le délai, en secondes, pris par une entité de réserve EDR pour fournir sa puissance maximale de réserve primaire RP_max à partir de l'instant de survenance de l'écart de fréquence. Ce délai d'activation maximal ne peut pas dépasser un « délai d'activation total toléré » égal à t2 = 30s.

Par exemple, au plus tard à t = 30 s, une batterie BAT participant au réglage primaire de fréquence doit atteindre une puissance maximale de réserve primaire fournie RP_max_bat de telle sorte qu'à cet instant, $\Delta P = \Delta P1 = | RP_max_bat - P_default |$. $\Delta P$ est alors maximal.

Une seconde règle imposée par le gestionnaire d'énergie GEST est qu'au plus tard quinze secondes après la survenance d'un écart de fréquence perturbant l'équilibre du réseau RES, la réponse en puissance active de l'entité de réserve EDR ait atteint 50% de la totalité de sa puissance maximale de réserve primaire RP_max.

La seconde partie de la courbe illustrée sur la figure 2 correspond à une droite stationnaire pour un instant t supérieur à t2. Le gestionnaire du réseau RTE impose en effet que la totalité de la puissance de réserve primaire RP_max fournie par l'entité de réserve EDR puisse être délivrée au plus tard à t2 = 30 s et ce, pendant une durée minimale de quinze minutes. Ainsi, à partir de t2 = 30 s et ce, pendant une durée minimale de quinze minutes, la réponse en puissance active de l'entité de réserve EDR doit être stationnaire et égale à sa puissance maximale de réserve primaire RP_max. L'énergie stockée par la réserve primaire de l'entité de réserve EDR doit donc être a minima égale à P_max * 0,25 h.

Toute installation électrique participant au réglage primaire de fréquence du réseau interconnecté européen doit être capable d'activer une réponse de puissance active lors d'un écart de fréquence ayant une allure similaire à, ou au-dessus de, la ligne pleine de la courbe telle que représentée sur la figure 2. On appellera par la suite « courbe de tolérance », la courbe de la figure 2.

Les règles illustrées par la figure 2 sont spécifiques aux entités de réserve EDR correspondant à des batteries ou des agrégats et sont donc prises en compte par l'organe de contrôle REG de chaque unité de réserve de ces entités de réserve EDR (une telle unité correspondant à une batterie par exemple) afin de transmettre à ces unités des consignes en puissance active P_ref_bat respectant ces règles. Dans ce mode de réalisation, l'organe de contrôle REG correspond à un régulateur de puissance d'une batterie. En variante, l'organe de contrôle peut correspondre à un onduleur ou tout autre organe permettant la transmission d'une consigne de puissance active à une unité participant au réglage primaire de fréquence. Classiquement, lors de la survenance d'un écart de fréquence sur le réseau RES, chaque organe de contrôle calcule une unique consigne de réponse en puissance ayant sensiblement l'allure de la courbe représentée en figure 2 et la transmet à chaque unité de réserve d'une entité de réserve EDR. L'entité de réserve EDR transmet alors une puissance au réseau RES correspondant à la résultante de l'ensemble des consignes de réponse en puissance reçues par chaque unité de l'entité EDR pour assurer le réglage primaire de fréquence.

Il est maintenant fait référence à la figure 3. La figure 3 illustre un procédé mis en œuvre par un organe de contrôle REG d'une batterie BAT pour le calcul d'une consigne de puissance active P_ref_bat à transmettre à une batterie BAT pour sa participation au réglage primaire de fréquence, la batterie BAT étant une entité de réserve EDR du réseau RES ou une unité au sein d'une entité de réserve EDR, par exemple dans le cas d'une agrégation. L'organe de contrôle REG comprend a minima un circuit de traitement du type précité, incluant au moins un processeur PROC et une mémoire MEM apte à stocker au moins les instructions d'un programme informatique au sens de la présente description. Une première étape S1 du procédé consiste à obtenir une mesure de la fréquence f du réseau électrique RES. En variante, cette valeur peut être donnée de façon différentielle, comme l'écart de fréquence entre la fréquence f du réseau et la fréquence nominale f_0 du réseau RES, égale à 50 Hz.

Le processeur PROC de l'organe de contrôle REG de la batterie BAT effectue ensuite au moins deux calculs de consignes de puissance active P_ref_brut et P_ref_filtré aux étapes S21 et S22, de sorte à obtenir une première consigne de puissance active P_ref_brut à l'étape S21 et une seconde consigne de puissance active P_ref_filtré à l'étape S22.

Le calcul de la première consigne de puissance active P_ref_brut est effectué selon une loi statique définie par l'équation suivante :

[Math.1]

$$P_ref_brute = P0 - K(f - f_0)$$

Un premier terme est donné par P0. P0 est une consigne de puissance exprimée en mégawatts (MW), fixée dans les paramètres de fonctionnement de la batterie BAT, également appelée un « offset » ou « consigne nominale de puissance ». Dans le mode de réalisation décrit, la consigne nominale de puissance P0 est reliée à la gestion de l'état de charge de la batterie. En variante, la consigne nominale de puissance P0 peut également être une consigne de puissance constante sur une fenêtre de temps donnée, dans le cadre d'un service d'arbitrage de la batterie (c'est-à-dire des achats et ventes d'énergie sur des marchés) exploitant la volatilité des prix de l'énergie sur ces marchés par exemple. La consigne nominale de puissance P0 peut également être liée à une consigne de pilotage centralisé, notamment dans le cas où la batterie BAT fait partie d'une agrégation (ou pool). P0 est donc une puissance de consigne de la batterie BAT par défaut, indépendante de sa participation au réglage primaire de fréquence du réseau RES. Cela signifie en particulier que sans mécanisme d'ajustement lié au réglage primaire de fréquence, une puissance par défaut fournie au réseau par une batterie P_default_bat correspond à P0.

Un second terme est donné par K(f-f_0) et représente le terme lié à au réglage primaire de fréquence du réseau RES par la batterie BAT. La valeur K est une constante, appelée « énergie réglante de la batterie » et exprimée en mégawatts par hertz (MW/Hz). Enfin (f-f_0) représente l'écart de fréquence entre la fréquence f mesurée du réseau RES et la fréquence nominale f_0 du réseau.

En parallèle du calcul d'une première consigne de puissance active P_ref_brut, le processeur PROC de l'organe de contrôle REG1 de la batterie BAT effectue le calcul d'une seconde consigne de puissance active P_ref_filtré à une étape S22. Pour ce faire, le processeur PROC transforme tout d'abord, à l'étape S211, la fréquence f mesurée du réseau RES en une fréquence f_filtrée, par application d'une fonction de filtrage. Une telle fonction de filtrage correspond à une fonction filtre d'ordre un caractérisée par une constante de temps T. En variante, la fonction de filtrage peut correspondre à une fonction filtre ayant une limitation de rampe et caractérisée par une pente de raideur Rf ou à un filtre de type « moyenne glissante » caractérisé par une fenêtre de temps Tm.

Le calcul de la seconde consigne de puissance P_ref_filtré est ensuite effectué à l'étape S22 selon une loi statique définie par l'équation suivante :

[Math.2]

$$P_ref_filtré = P0 - K(f_filtrée - f_0)$$

dans laquelle P0, K et f_0 ont été définis précédemment et f_filtrée correspond à la fréquence calculée à partir de la fréquence f mesurée du réseau RES, cette fréquence étant appelée fréquence filtrée.

Les deux calculs de consignes de puissance active P_ref_brut et P_ref_filtré sont ainsi tous deux effectués selon une même loi statique, reliant une variable de puissance (notée Puissance calculée) à une variable fréquentielle (notée ici *fréquence*) :

[Math.3]

$$Puissance\ calculée = P0 - K(fréquence - f_0)$$

La première consigne de puissance active P_ref_brut est calculée à partir de la fréquence f telle que mesurée sur le réseau, et est calculée de ce fait selon un premier modèle de loi statique dit « brut », de sorte qu'une variation de la fréquence f mesurée du réseau RES induit une première consigne de puissance active P_ref_brut ayant une première vitesse de variation dans la temps. La seconde consigne de puissance active P_ref_filtré est calculée, quant à elle, à partir d'une fréquence f filtrée, calculée par le processeur PROC à partir de la fréquence f mesurée du réseau. Elle est de ce fait calculée selon un modèle de loi statique dit « filtré », distinct du premier modèle, de sorte qu'une variation de la fréquence mesurée du réseau induit une seconde consigne de puissance active P_ref_filtré ayant une seconde vitesse de variation dans le temps, cette seconde vitesse de variation étant inférieure à la première vitesse de variation. Les vitesses de variation des consignes de puissance active calculées P_ref_brut et P_ref_filtré seront détaillées dans la description de la figure suivante.

Le calcul distinct de deux consignes de puissance active P_ref_brut et P_ref_filtré au moins, conduit à une étape S3 dans laquelle le processeur PROC de l'organe de contrôle REG de la batterie BAT sélectionne une consigne de puissance active P_ref_bat à transmettre à la batterie BAT parmi au moins la première consigne de puissance active P_ref_brut et la seconde consigne de puissance active P_ref_filtré. La sélection de la consigne de puissance active P_ref_bat est effectuée sur la base de différentes critères de sélection qui seront détaillés dans la suite de la description.

Une fois la consigne de puissance active P_ref_bat sélectionnée, l'organe de contrôle REG transmet cette consigne de puissance active sélectionnée P_ref_bat à la batterie BAT à l'étape S4, de sorte que la batterie BAT transmet au réseau électrique RES une puissance active P_bat définie par la consigne de puissance active P_ref_bat sélectionnée afin de contribuer au réglage primaire de fréquence du réseau RES.

Il est maintenant fait référence à la figure 4. La figure 4 représente un graphique similaire au graphique de la figure 2, sur lequel ont été ajoutées deux courbes. Une première courbe correspond à la variation dans le temps de la première consigne de puissance active P_ref_brut et une seconde courbe correspond à la variation dans le temps de la seconde consigne de puissance active P_ref_filtré, le calcul de chacune des consignes ayant été détaillé précédemment. La troisième courbe du graphique de la figure 4 est identique à la courbe de la figure 2 et correspond à la courbe de tolérance en temps d'activation et en puissance pour une entité de réserve EDR correspondant à une batterie ou à un agrégat.

On constate tout d'abord que les deux consignes de puissance active P_ref_brut et P_ref_filtré ont leur courbes représentatives respectives au-dessus de la ligne pleine de la courbe de tolérance, ce qui signifie en particulier que les deux consignes de puissance active P_ref_brut et P_ref_filtré calculées par le processeur PROC de l'organe de contrôle REG de la batterie BAT respectent les délais en temps d'activation et en puissance tolérés par le gestionnaire d'énergie GEST du réseau RES dans le cadre du réglage primaire de fréquence. À t = 0 s, les courbes correspondant aux deux consignes de puissance active P_ref_brut et P_ref_filtré sont nulles. Cela signifie en particulier qu'à la survenance d'un écart de fréquence sur le réseau RES, les deux consignes de puissances P_ref_brut et P_ref_filtré sont égales à la puissance non ajustée P_default = P0.

On s'intéresse dans un premier temps à la première courbe correspondant à la première consigne de puissance active P_ref_brut, calculée selon un modèle brut. La première courbe comprend tout d'abord une partie linéaire ascendante, ayant une pente de raideur Rb sensiblement infinie de sorte à former un quasi-échelon. Sur l'axe des abscisses, correspondant à l'axe temporel, la croissance de la première courbe commence à un instant t = Tb1, correspondant au délai d'activation de la première consigne de puissance P_ref_brut. Tb est strictement inférieur au délai d'activation toléré t1. Dans le cas de la première courbe, le délai d'activation Tb1 et le délai d'activation total Tb2 sont sensiblement égaux. Autrement dit, la première consigne de puissance active P_ref_brut déclenche la puissance maximale de la réserve primaire RP_max_bat de la batterie BAT de façon quasi-instantanée. Une fois la puissance maximale de la réserve primaire RP_max_bat atteinte, la première courbe est stationnaire à $\Delta P = \Delta P1 = |$ RP_max_bat- P0 $|$ pendant une durée supérieure à 15 minutes.

On s'intéresse dans un second temps à la seconde courbe correspondant à la seconde consigne de puissance active P_ref_filtré, calculée selon un modèle filtré. L'allure de la seconde courbe est sensiblement similaire à l'allure de la courbe de tolérance. La seconde courbe a un délai d'activation Tf1 sensiblement égal à t1 = 0,5 s. Autrement dit, avant Tf1, la deuxième courbe a une ordonnée nulle et la consigne de puissance active fournie P_ref_filtré est donc égale à P_default = P0. À partir de t = Tf1, la deuxième courbe présente une courbe linéaire ascendante ayant une pente de raideur Rf, Rf étant strictement inférieure à Rb. $\Delta P$ augmente ainsi progressivement jusqu'à atteindre un maximum $\Delta P = \Delta P1 = |$ RP_max_bat - P0 $|$ à un instant t = Tf2, Tf2 étant strictement supérieur à Tb2. Tf2 correspond au délai d'activation total de la deuxième consigne de puissance active P_ref filtré et est sensiblement égal au délai d'activation total toléré t2. Une fois la puissance maximale de la réserve primaire de la batterie RP_max_bat atteinte, la deuxième courbe est stationnaire à $\Delta P1$ pendant une durée minimale de 15 minutes.

Les deux consignes de puissance active P_ref_brut et P_ref_filtré calculées par le processeur PROC de l'organe de contrôle REG de la batterie BAT se distinguent en particulier par leur pentes respectives Rb et Rf qui donnent aux deux consignes des vitesses de croissance différentes. En particulier, la première consigne de puissance active P_ref_brut a une pente Rb et donc une vitesse de croissance supérieure à celle de la deuxième consigne de puissance active P_ref_filtré. Autrement dit, le délai d'activation total Tb2 de la première consigne P_ref_brut est plus court que le délai d'activation total Tf2 de la deuxième consigne P_ref_filtré.

En conséquence, il est alors possible de distinguer une consigne de puissance dite « rapide », correspondant à la première consigne de puissance active P_ref_brut d'une consigne de puissance dite « lente », correspondant à la seconde consigne de puissance active P_ref_filtré, les notions « lente » et « rapide » résultant ici de la comparaison de la vitesse de variation dans le temps des consignes calculées P_ref_brut et P_ref_filtré l'une par rapport à l'autre. Le délai d'activation total Tb2 de la consigne rapide P_ref_brut est sensiblement égal au délai d'activation Tb1 de la consigne rapide P_ref_brut, de sorte que la puissance active transmise par la batterie selon une consigne rapide P_ref_brut est maximale et égale à RP_max_bat de façon quasiment immédiate une fois la consigne rapide activée à Tb1. Le délai d'activation total de la consigne lente P_ref_filtré est, quant à lui, au plus proche du délai d'activation total toléré par le gestionnaire d'énergie, à savoir t2 = 30 s. Ainsi, la consigne rapide P_ref_brut est caractérisée par une réponse sensiblement immédiate tandis que la consigne lente P_ref_filtré présente une réponse plus « progressive » par comparaison à la consigne rapide P_ref_brut.

Par conséquent, la sélection d'une consigne de puissance active à transmettre à la batterie P_ref_bat à l'étape S3 telle que représentée sur la figure 3 consiste à sélectionner une consigne P_ref_bat parmi au moins une première consigne de puissance rapide P_ref_brut et une seconde consigne de puissance lente P_ref_filtré. La possibilité d'un choix entre notamment une consigne lente et une consigne rapide à transmettre à la batterie BAT permet de tirer profit des règles en délai d'activation du gestionnaire d'énergie pour optimiser le fonctionnement de la batterie BAT, notamment pour une gestion optimisée de son état de charge et de son cyclage, tel qu'il sera détaillé dans la description des figures suivantes.

Une telle sélection de consigne S3 peut avoir lieu à chaque pas de temps au cours duquel une mesure de la fréquence f du réseau RES est obtenue et le calcul de deux consignes au moins telles que définies précédemment est effectué. À chaque pas de temps, l'organe de contrôle REG de la batterie BAT peut envoyer à la batterie BAT une consigne de puissance active P_ref_bat visant notamment une transmission de puissance lente, définie par P_ref_filtré ou rapide, définie par P_ref_brut.

Un tel choix de consigne est envisageable car les batteries disposent d'une grande modularité dans leur réponse en puissance active, ce qui leur permet en particulier d'alterner entre des transmissions dites lentes et des transmissions dites rapides de puissance sans perdre en performance. Une telle sélection dynamique de consigne de puissance s'avérerait bien plus coûteux en énergie et en performance pour d'autres types d'entités de réserve EDR telles que les centrales de production et plus généralement, pour toutes les installations comportant une génératrice avec des parties tournantes et pour lesquelles la fréquence du réseau est liée à des organes d'admission de fluide moteur de turbines. Des consignes de puissance variables impliqueraient des modularités de vitesse de rotation de ces parties tournantes, ce qui entraînerait une fatigue mécanique de ces organes de rotation.

Il est maintenant fait référence à la figure 5. La figure 5 détaille la sélection d'une consigne de puissance P_ref_bat à transmettre à une batterie BAT, la batterie BAT étant une entité de réserve EDR ou une unité de réserve appartenant à une entité de réserve EDR participant au réglage primaire de fréquence du réseau électrique RES. La consigne de puissance à transmettre à la batterie P_ref_bat est sélectionnée à l'étape S3 par l'organe de contrôle REG de la batterie BAT parmi au moins une première consigne de puissance P_ref_brut et une deuxième consigne de puissance P_ref_filtré.

La possibilité d'une sélection de consigne de puissance P_ref_bat parmi une première consigne P_ref_filtré et une deuxième consigne P_ref_brut permet notamment une optimisation de la gestion d'un état de charge SOC de la batterie BAT tout au long de sa participation au réglage primaire de fréquence. L'état de charge SOC de la batterie BAT correspond à une valeur instantanée de la quantité d'énergie disponible pour le réglage primaire de fréquence et est exprimée en pourcentage de la capacité utile. Par définition, l'état de charge maximal d'une batterie BAT correspond à 100% de sa capacité utile. On définit également un seuil haut d'état de charge SOC_haut et un seuil bas d'état de charge SOC_bas, le seuil bas d'état de charge SOC_bas étant inférieur au seuil haut d'état de charge SOC_haut. Lorsque l'état de la charge SOC de la batterie BAT dépasse le seuil haut d'état de charge SOC_haut, la batterie BAT est dans un mode de surcharge. Autrement dit, la batterie BAT est dans un mode de stockage d'énergie prépondérant. Lorsque l'état de la charge SOC de la batterie BAT est en-deçà du seuil bas d'état de charge SOC_bas, la batterie BAT est dans un mode de sous-charge. Autrement dit, la batterie BAT est dans un mode de fourniture d'énergie prépondérant. L'utilisation de la batterie BAT dans des modes de sous-charge ou de surcharge conduit à un risque pour la batterie BAT de ne pas disposer d'un stock d'énergie dédié au réglage primaire suffisant pour répondre aux règles imposées par RTE dans le cadre du réglage primaire de fréquence du réseau RES, notamment en terme de tenue de la fourniture de la puissance maximale de réserve primaire RP_max_bat au réseau RES pendant une durée minimale de quinze minutes en cas d'écart de la fréquence supérieur à 200 mHz. Une gestion optimisée de l'état de charge SOC de la batterie BAT dans le cadre sa participation au réglage primaire du réseau RES consiste par conséquent à maintenir la batterie BAT dans un mode nominal de charge, défini par une valeur de l'état de charge SOC de la batterie BAT comprise entre le seuil haut d'état de charge SOC_haut et le seuil bas d'état de charge SOC_bas.

Par conséquent, un critère de sélection de la consigne de puissance P_ref_bat à transmettre à la batterie BAT est l'état de charge SOC de la batterie BAT comme illustré par un premier algorithme S30 tel que représenté sur la figure 5. L'état de charge SOC de la batterie BAT est tout d'abord comparé au seuil haut d'état de charge SOC_haut de la batterie à une étape S31. Si l'état de charge SOC de la batterie BAT est strictement supérieur au seuil haut d'état de charge SOC_haut, cela signifie que la batterie BAT est dans un mode de surcharge d'énergie. Une gestion optimisée de l'état de charge de la batterie BAT consiste alors à maximiser sa délivrance d'énergie au réseau RES afin diminuer la quantité d'énergie stockée par la batterie BAT. Les consignes de puissance active P_ref_brut et P_ref_filtré sont alors comparées l'une par rapport à l'autre par l'organe de contrôle REG à une étape S311 et la consigne sélectionnée P_ref_bat pour être transmise à la batterie est la consigne maximale parmi la première consigne de puissance P_ref_brut à l'étape S3112 ou la deuxième consigne de puissance P_ref_filtré à l'étape S3111.

Si, à l'issue de l'étape S31, l'état de charge SOC est inférieur au seuil haut d'état de charge SOC_haut, l'état de charge SOC de la batterie BAT est ensuite comparé au seuil bas d'état de charge SOC_bas à une étape S32. Si l'état de charge SOC de la batterie BAT est effectivement inférieur au seuil bas d'état de charge SOC_bas, cela signifie que la batterie BAT est dans un mode de sous-charge d'énergie. Une gestion optimisée de l'état de charge SOC de la batterie BAT consiste alors à minimiser sa transmission d'énergie au réseau RES afin de conserver la quantité maximale d'énergie stockée par la batterie BAT. Les consignes de puissance active P_ref_brut et P_ref_filtré sont alors comparées l'une par rapport à l'autre par l'organe de contrôle REG à une étape S321 et la consigne sélectionnée P_ref_bat pour être transmise à la batterie BAT est la consigne minimale parmi la première consigne de puissance P_ref_brut à l'étape S3212 ou la deuxième consigne de puissance P_ref_filtré à l'étape S3211. En variante, les étapes S31 et S32 peuvent être interverties de sorte à que l'état de charge SOC de la batterie BAT peut être comparé au seuil bas d'état de charge SOC_bas avant d'être comparé au seuil haut d'état de charge SOC_haut. Ces étapes et la sélection de la consigne de puissance P_ref_bat sont en effet symétriques en ce que l'algorithme S30 consiste à déterminer si la batterie BAT est dans un mode dommageable pour sa gestion d'état de charge SOC, à savoir dans un mode de surcharge ou de sous-charge.

Si, à l'issue de l'étape S32, l'état de charge SOC de la batterie BAT est supérieur au seuil bas d'état de charge à une étape S322, cela signifie que la batterie BAT est dans un mode nominal de charge et par conséquent, quelle que soit la consigne de puissance sélectionnée P_ref_bat par l'organe de contrôle REG pour être transmise à la batterie BAT, la batterie garantit la mise à disposition du réseau RES d'une quantité d'énergie suffisante pour assurer la fourniture de la totalité de sa réserve primaire (donc de fournir une puissance active égale à RP_max_bat) sur une durée minimale de quinze minutes notamment, conformément aux tolérances du gestionnaire d'énergie GEST telles que décrites par la figure 2. La sélection de la consigne de puissance P_ref_bat à transmettre à la batterie BAT peut alors être effectuée sur la base d'un autre critère d'optimisation du fonctionnement de la batterie BAT, qui sera détaillé dans la description de la figure suivante.

Les étapes de l'algorithme S30 tel que décrit par la figure 5 sont exécutées par le processeur PROC de l'organe de contrôle REG de la batterie BAT à l'étape S3.

Il est maintenant fait référence à la figure 6. La figure 6 détaille un algorithme de sélection S300 d'une consigne de puissance P_ref_bat à transmettre à une batterie BAT, la batterie BAT étant une entité de réserve EDR ou une unité appartenant à une entité de réserve EDR participant au réglage primaire de fréquence. La consigne de puissance à transmettre à la batterie P_ref_bat est sélectionnée à l'étape S3 par l'organe de contrôle REG de la batterie BAT parmi au moins une première consigne de puissance P_ref_brut qui est une consigne dite « rapide » au sens de sa vitesse de variation dans le temps, et une deuxième consigne de puissance P_ref_filtré, qui est une consigne dite « lente ». La sélection d'une consigne de puissance P_ref_bat parmi au moins deux consignes ayant des vitesses de variation différentes dans le temps permet notamment d'optimiser un cyclage de la batterie BAT et donc de limiter un vieillissement de la batterie. En effet, une batterie BAT est caractérisée, entre autres, par son nombre de cycles, correspondant au nombre de fois qu'une batterie BAT peut subir une décharge et une recharge avant de perdre en performance de façon irréversible. Une telle dégradation des batteries BAT correspond au vieillissement de la batterie BAT. Le vieillissement peut dépendre de plusieurs facteurs et notamment du cyclage de la batterie BAT, c'est-à-dire de la gestion de cycles de charge puis décharge de la batterie BAT lors de son utilisation.

L'algorithme S3000 tel que détaillé par la figure 6 vise par conséquent à optimiser le cyclage de la batterie BAT par le choix d'une consigne de puissance lente P_ref_filtré ou rapide P_ref_brut. Pour cela, on s'intéresse tout d'abord au signe de la première consigne de puissance P_ref_brut à des étapes S300 et S301.

Si la première consigne P_ref_brut est nulle, alors la consigne de puissance P_ref_bat transmise à la batterie BAT par l'organe de contrôle REG est nulle comme illustré par une étape S3001 de la figure 6.

Si la première consigne de puissance P_ref_brut est strictement négative à l'issue de l'étape S300, on compare la première consigne de puissance P_ref_brut à la deuxième consigne de puissance P_ref_filtré à une étape S3003 et on retient la consigne ayant la valeur maximale parmi les deux consignes P_ref_brut et P_ref_filtré. On note P1 une telle valeur maximale. Si P1 correspond à la première consigne P_ref_brut, alors la consigne de puissance sélectionnée pour être transmise à la batterie P_ref_bat correspond à la première consigne de puissance P_ref_brut, comme le montre l'étape S305. Si P1 ne correspond pas à la première consigne de puissance P_ref_brut (autrement dit, P1 correspond à la deuxième consigne P_ref_filtré), alors on regarde à une étape S304 le signe de la deuxième consigne P_ref_filtré. Si la consigne P_ref filtré est strictement positive, alors la consigne de puissance sélectionnée pour être transmise à la batterie P_ref_bat est nulle comme le montre une étape S3042. Si, au contraire, P_ref_filtré est négative, alors la deuxième consigne P_ref filtré est sélectionnée pour être la consigne de puissance transmise à la batterie P_ref_bat à une étape S3041. En résumé, si la première consigne de puissance P_ref_brut est strictement négative, la consigne de puissance sélectionnée pour être transmise à la batterie P_ref_bat est la valeur maximale parmi les deux valeurs de consigne P_ref_brut et P_ref_filtré à condition que cette valeur maximale soit strictement négative. Sinon, la consigne de puissance transmise à la batterie P_ref_bat est nulle.

Si, à l'issue de l'étape S300, la première consigne de puissance P_ref_brut est strictement positive, on compare la première consigne de puissance P_ref_brut à la deuxième consigne de puissance P_ref_filtré à une étape S3002 et on retient la consigne ayant la valeur minimale parmi les deux consignes P_ref_brut et P_ref_filtré. On note P2 une telle valeur minimale. Si P2 correspond à la première consigne P_ref_brut, alors la consigne de puissance sélectionnée pour être transmise à la batterie P_ref_bat correspond à la première consigne de puissance P_ref_brut, comme le montre une étape S302. Si P2 ne correspond pas à la première consigne de puissance P_ref_brut (autrement dit, P2 correspond à la deuxième consigne P_ref_filtré), alors on regarde à une étape S303 le signe de la deuxième consigne P_ref_filtré. Si P_ref_filtré est strictement négative, alors la consigne de puissance sélectionnée pour être transmise à la batterie P_ref_bat est nulle comme le montre une étape S3032. Si, au contraire, la consigne P_ref_filtré est positive, alors la deuxième consigne P_ref_filtré est sélectionnée pour être la consigne de puissance transmise à la batterie P_ref_bat à une étape S3031. En résumé, si la première consigne de puissance P_ref_brut est strictement positive, la consigne de puissance sélectionnée pour être transmise à la batterie P_ref_bat est la valeur minimale parmi les deux valeurs de consigne P_ref_brut et P_ref_filtré à condition que cette valeur minimale soit strictement positive. Sinon, la consigne de puissance transmise à la batterie P_ref_bat est nulle.

Les étapes de l'algorithme S3000 sont exécutées par le processeur PROC de l'organe de contrôle REG de la batterie à l'étape S3. Dans un mode de réalisation, l'algorithme S3000 est combiné à l'algorithme S30 décrit précédemment de sorte que l'algorithme S3000 est exécuté à l'étape S322 de l'algorithme S30. Autrement dit, les critères de sélection de la consigne de puissance à transmettre à la batterie P_ref_bat respectent l'algorithme S3000 lorsque la batterie BAT est dans un mode nominal de charge. En variante, les algorithmes S30 et S3000 peuvent être exécutés par le processeur PROC de l'organe de contrôle REG de la batterie de façon indépendante.

Il est maintenant fait référence à la figure 7. La figure 7 représente l'évolution d'une consigne de puissance transmise à une batterie BAT participant au réglage primaire de fréquence d'un réseau électrique RES. Deux graphiques sont représentés.

Le graphique situé en bas de la figure 7 représente l'évolution de la fréquence f du réseau électrique RES mesurée en hertz dans le temps. On remarque qu'à t = 0 s, la fréquence f du réseau RES est stable et égale à la fréquence nominale f_0 = 50 Hz. Le réseau est donc à l'équilibre jusqu'à t = 10 s, instant auquel survient une chute de fréquence sur le réseau RES. La fréquence passe en effet de 50 Hz à 49,8 Hz et ce, pendant 30 secondes avant de remonter à 50 Hz à t = 40 s et de se stabiliser.

Le graphique situé en haut de la figure 7 représente différentes allures de réponse en puissance active d'une batterie BAT participant au réglage primaire de fréquence du réseau RES. La figure 7 représente en ordonnée la puissance normalisée transférée par la batterie BAT par rapport à la puissance maximale de réserve primaire RP_max_bat de la batterie BAT au cours du temps, représenté en secondes en abscisse. Cette puissance normalisée est comprise entre -1 (la puissance maximale de réserve primaire RP_max_bat stockable par la batterie BAT est effectivement emmagasinée) et 1 (la puissance maximale de réserve primaire RP_max_bat que peut fournir la batterie BAT est effectivement transmise). Sur la figure 7, l'axe des ordonnées présente des valeurs comprises entre 0 et 1 car le réseau RES connaît une chute de fréquence, ce qui signifie que l'ajustement lié au réglage de fréquence du réseau RES consiste à fournir de l'énergie au réseau RES. Lorsque la puissance vaut 0, cela signifie que la batterie BAT ne transmet aucune puissance au réseau RES. En particulier, on considère sur la figure 7 que hors de tout contexte de réglage primaire de fréquence, la batterie BAT n'échange pas d'énergie avec le réseau RES. Autrement dit, son offset P0 est nul.

La courbe en trait pointillé fin représente une réponse en puissance active correspondant à la première consigne de puissance P_ref_brut. La courbe en trait pointillé épais représente une réponse en puissance active correspondant à la deuxième consigne de puissance P_ref_filtré. Comme détaillé dans la description de la figure 4, chacune des consignes P_ref_brut et P_ref_filtré respecte les délais d'activation attendus par le gestionnaire d'énergie du réseau RES pour répondre à l'écart de fréquence observé sur le graphique du bas. Les allures des courbes correspondant aux consignes P_ref_brut et P_ref_filtré sont similaires à celles décrites dans la figure 4. Enfin, la courbe en trait plein représente une réponse en puissance active correspondant la consigne de puissance sélectionnée pour être transmise à la batterie P_ref_bat. La consigne de puissance sélectionnée P_ref_bat, représentée en traits pleins sur le graphique du haut de la figure 7 est sélectionnée selon les critères de l'algorithme S3000 tel que détaillé dans la description de la figure 6.

Entre t = 0 s et t = 10 s, le réseau RES est à l'équilibre. Aucun mécanisme d'ajustement n'est déclenché et la batterie BAT n'échange pas d'énergie avec le réseau RES. La consigne P_ref_bat est donc égale à P0 = 0.

Entre t = 10 s et t = 40 s, le réseau RES connaît une chute de fréquence de 0,2 Hz (la fréquence passe de 50 Hz à 49,8 Hz) et le mécanisme d'ajustement automatique par réglage primaire de fréquence est activé. L'écart de fréquence étant supérieur ou égal à 200 mHz, la batterie BAT doit fournir la totalité de sa puissance de réserve primaire RP_max_bat au réseau RES. La batterie BAT considérée étant une entité de réserve EDR (ou une unité appartenant à une entité de réserve EDR), son organe de contrôle REG calcule automatiquement une consigne de puissance P_ref_bat adaptée au réglage primaire de fréquence. L'organe de contrôle REG de la batterie BAT calcule alors au moins les deux consignes de puissance P_ref_brut et P_ref_filtré telles que représentées sur le graphique du haut de la figure 7. Dans le mode de réalisation décrit, l'algorithme S3000 est exécuté par le processeur PROC de l'organe de contrôle REG de la batterie BAT. Entre t = 10 s et t = 40 s, la première consigne de puissance P_ref_brut est strictement positive. L'algorithme S3000 indique que la consigne de puissance à sélectionner P_ref_bat correspond à la consigne minimale entre les consignes P_ref_brut et P_ref_filtré (qui est ici P_ref_filtré) pourvu qu'elles soient strictement positives. Cette condition étant vérifiée entre t= 10 s et t = 40 s, la consigne de puissance sélectionnée P_ref_bat correspond donc à la deuxième consigne de puissance P_ref_filtré et la batterie transmet donc au réseau RES une puissance active selon une consigne lente P_ref_filtré. Une réponse en puissance active lente permet ici limiter la puissance active fournie par la batterie BAT et donc d'économiser son énergie.

À t = 40 s, le réseau RES connaît une augmentation de la fréquence (la fréquence f est à 49,8 Hz et remonte à 50 Hz). La première consigne de puissance P_ref_brut étant strictement positive, l'algorithme S3000 indique que la consigne de puissance à sélectionner P_ref_bat correspond à la à la consigne minimale entre les consignes P_ref_brut et P_ref_filtré (qui est ici P_ref_brut) pourvu qu'elles soient strictement positives. Cette condition étant vérifiée à t = 40 s, la consigne de puissance sélectionnée P_ref_bat correspond donc à la première consigne de puissance P_ref_brut et la batterie BAT transmet donc au réseau RES une puissance active selon une consigne rapide P_ref_brut. Une réponse en puissance active rapide permet ici de ramener l'énergie transmise par la batterie BAT au réseau RES à zéro le plus rapidement possible, le réseau RES n'ayant plus besoin de de la puissance active de la batterie BAT à cet instant. Une consigne rapide permet alors de limiter la décharge de la batterie BAT.

Il est maintenant fait référence à la figure 8. La figure 8 représente l'évolution de la consigne de puissance transmise à une batterie BAT participant au réglage primaire de fréquence d'un réseau électrique RES. Deux graphiques sont représentés. La figure 8 est similaire à la figure 7 hormis que l'offset (normalisé) P0 de la batterie BAT dans le contexte de la figure 8 n'est pas nul. Dans la figure 8, on a P0 = - 0,4, ce qui signifie que hors contexte de tout réglage primaire de fréquence, la batterie BAT emmagasine de l'énergie provenant du réseau RES.

Entre t = 0 s et t = 10 s, le réseau RES est à l'équilibre. Aucun mécanisme d'ajustement n'est déclenché et la batterie BAT échange de l'énergie avec le réseau RES par défaut. La consigne P_ref_bat est donc égale à P0 = -0,4.

Entre t = 10 s et t = 40 s, le réseau RES connaît une chute de fréquence de 0,2 Hz (la fréquence passe de 50 Hz à 49,8 Hz). L'écart de fréquence étant supérieur ou égal à 200 mHz, le mécanisme d'ajustement automatique par réglage primaire de fréquence est activé. La batterie BAT considérée étant une unité de réserve EDR, son organe de contrôle REG calcule automatiquement une consigne de puissance P_ref_bat adaptée au réglage primaire de fréquence. L'organe de contrôle REG de la batterie BAT calcule alors au moins les deux consignes de puissance P_ref_brut et P_ref_filtré telles que représentées sur le graphique du haut de la figure 8. Dans le mode de réalisation décrit, l'algorithme S3000 est exécuté par le processeur PROC de l'organe de contrôle REG de la batterie BAT. Entre t = 10 s et t = 40 s, la première consigne de puissance P_ref_brut connait un changement de signe.

En effet, entre t = 10 s et t = 15 s, la première consigne P_ref_brut est strictement négative (à t = 10 s) puis est nulle. De plus, la première consigne P_ref_brut est supérieure à la deuxième consigne P_ref_filtré sur cet intervalle de temps. L'algorithme S3000 indique alors que la consigne de puissance P_ref_bat est nulle sur cet intervalle. En effet, un écart de fréquence ayant eu lieu à t = 10 s, il s'agit pour la batterie BAT de stopper son soutirage d'énergie du réseau le plus rapidement possible (c'est-à-dire de revenir à une puissance active nulle par une consigne rapide) afin de compenser la chute de fréquence du réseau RES.

Après t = 15 s et jusqu'à t = 40 s, les deux consignes P_ref_brut et P_ref_filtré sont strictement positives et la première consigne P_ref_brut est supérieure à la deuxième consigne P_ref_filtré. L'algorithme S3000 indique alors de sélectionner une consigne de puissance P_ref_bat correspondant à la consigne lente P_ref_filtré. En effet, la situation est identique à celle décrite en figure 7 entre t = 10 s et t = 40 s, pendant laquelle un fonctionnement optimisé de la batterie BAT consiste à fournir une réponse en puissance active la plus lente possible afin d'économiser l'énergie de la batterie BAT.

À t = 40 s, la fréquence du réseau RES remonte de 49,8 Hz à 50 Hz. La première consigne P_ref_brut étant strictement positive et inférieure à la deuxième consigne P_ref_filtré, la consigne de puissance sélectionnée P_ref_bat correspond à la consigne rapide P_ref_brut.

Après t = 40 s et jusqu'à t = 48 s environ, la première consigne P_ref_brut est strictement négative et strictement inférieure à la deuxième consigne P_ref_filtré, la deuxième consigne P_ref_filtré étant strictement positive, d'où une consigne de puissance P_ref_bat nulle. Enfin, après t = 48 s environ, la deuxième consigne P_ref_filtré est strictement négative (et toujours supérieure à la première consigne P_ref_brut) et est donc sélectionnée en tant que consigne de puissance P_ref_bat.

Une telle consigne de puissance P_ref_bat permet, dans le contexte de la figure 8, une optimisation du cyclage de la batterie BAT. En effet, entre t = 10 s et t= 15 s par exemple, un choix d'une consigne lente P_ref_filtré serait équivalent à effectuer une charge progressive de la batterie BAT (la consigne P_ref_filtré étant négative) suivi d'une décharge progressive de la batterie BAT entre t = 15 s et t = 40 s (la consigne P_ref_filtré étant positive). La sélection de consigne de puissance telle que mise en œuvre dans la présente description permet ainsi de choisir un retour quasi immédiat à une puissance active nulle à t = 10 s, de sorte à éviter un cycle d'une charge suivie d'une décharge de la batterie BAT : le procédé décrit optimise par conséquent le cyclage de la batterie BAT et évite la réalisation d'un cycle supplémentaire de charge puis décharge inutile dans le contexte de la figure 8.

## Revendications

**1.** Procédé mis en œuvre par des moyens informatiques, de sélection d'une consigne de puissance (P_ref_bat) transmise à au moins une batterie (BAT) pour un réglage primaire de fréquence d'un réseau électrique (RES), ladite batterie (BAT) étant reliée au réseau électrique (RES) et étant apte à participer au réglage primaire de fréquence dudit réseau (RES) dans lequel :

- une fréquence nominale (f_0) est fixée par un gestionnaire du réseau (GEST), et
- une fréquence (f) du réseau (RES) est mesurable à tout instant donné,

la participation de la batterie (BAT) au réglage primaire de fréquence du réseau électrique (RES) consistant à contribuer à compenser un écart de fréquence entre la fréquence nominale (f_0) et la fréquence (f) du réseau (RES) en transmettant une puissance active (P_bat) audit réseau électrique (RES),

le procédé comportant les étapes :

/a/ obtenir une mesure de la fréquence (f) du réseau (RES),
/b/ calculer au moins en fonction de l'écart de fréquence entre la fréquence mesurée (f) et la fréquence nominale :

- une première consigne de puissance (P_ref_brut), calculée selon un modèle dit « brut », et variant dans le temps selon une première vitesse,
- et au moins une seconde consigne de puissance (P_ref_filtré), calculée selon un modèle dit « filtré », et variant dans le temps selon une deuxième vitesse inférieure à la première vitesse,

la consigne de puissance (P_ref_bat) à transmettre à la batterie (BAT) étant ainsi sélectionnable dans un ensemble comportant au moins une consigne calculée selon le modèle brut (P_ref_brut) et une consigne calculée selon le modèle filtré (P_ref_filtré),
la batterie (BAT) transmettant au réseau électrique (RES) la puissance active (P_bat) définie par la consigne de puissance (P_ref_bat) sélectionnée parmi ledit ensemble.

**2.** Procédé selon la revendication 1 dans lequel le calcul de la première consigne de puissance (P_ref_brut) et le calcul de la deuxième consigne de puissance (P_ref_filtré) dépendent au moins d'une consigne nominale de puissance (Po) de la batterie (BAT).

**3.** Procédé selon l'une des revendications précédentes, dans lequel la sélection entre la première consigne de puissance (P_ref_brut) et la deuxième consigne de puissance (P_ref_filtré) est fonction d'au moins un état de charge en cours (SOC) de la batterie (BAT), pour une minimisation de cyclage de la batterie (BAT).

**4.** Procédé selon la revendication 3, comprenant après l'étape /b/ :

/c/ obtenir une mesure d'un état de charge en cours (SOC) de la batterie (BAT) et comparer ladite mesure :

/c1/ à un premier seuil d'état de charge (SOC_haut) pour déterminer si la batterie (BAT) est dans un mode de surcharge si ladite mesure est supérieure au premier seuil d'état de charge (SOC_haut),
/c2/ à un second seuil d'état de charge (SOC_bas), inférieur au premier seuil d'état de charge (SOC_haut), pour déterminer si la batterie (BAT) est dans un mode de sous-charge si ladite mesure est inférieure au second seuil d'état de charge (SOC_bas), et

/d1/ si la condition /c1/ est remplie, la consigne de puissance transmise à la batterie (P_ref_bat) sélectionnée est la consigne de puissance maximale entre la première consigne de puissance (P_ref_brut) et la deuxième consigne de puissance (P_ref_filtré),
/d2/ si la condition /c2/ est remplie, la consigne de puissance transmise à la batterie (P_ref_bat) sélectionnée est la consigne de puissance minimale entre la première consigne de puissance (P_ref_brut) et la deuxième consigne de puissance (P_ref_filtré).

**5.** Procédé selon l'une des revendications précédentes, comprenant après l'étape /b/ :

/e/ si la première consigne de puissance (P_ref_brut) calculée à l'étape /b/ est nulle, la consigne de puissance sélectionnée pour être transmise à la batterie (P_ref_bat) est nulle,
/f/ si la première consigne de puissance (P_ref_brut) calculée à l'étape /b/ est négative, comparer la première consigne de puissance (P_ref_brut) et la deuxième consigne de puissance (P_ref_filtré) et identifier une consigne de puissance maximale P1 entre ces deux consignes (P_ref_brut, P_ref_filtré) et :

/f1/ si P1 est négative, la consigne de puissance sélectionnée pour être transmise à la batterie (P_ref_bat) est P1,
/f2/ sinon, la consigne de puissance sélectionnée pour être transmise à la batterie (P_ref_bat) est nulle,

/g/ si la première consigne de puissance (P_ref_brut) calculée à l'étape /b/ est positive, comparer la première consigne de puissance (P_ref_brut) et la deuxième consigne de puissance (P_ref_filtré) et identifier une consigne de puissance minimale P2 entre ces deux consignes (P_ref_brut, P_ref_filtré) et :

/g1/ si P2 est négative, la consigne de puissance sélectionnée pour être transmise à la batterie (P_ref_bat) est nulle,
/g2/ sinon, la consigne de puissance sélectionnée pour être transmise à la batterie (P_ref_bat) est P2.

**6.** Procédé selon la revendication 4, prise en combinaison avec la revendication 5, dans lequel, après l'étape /c/ : /d3/ si aucune des conditions /c1/ et /c2/ n'est remplie, mettre en œuvre les étapes /e/, /f/ et /g/ pour sélectionner la consigne de puissance à transmettre à la batterie (P_ref_bat).

**7.** Procédé selon l'une des revendications précédentes, la puissance active (P_bat) transmise par la batterie (BAT) au réseau électrique (RES) étant inférieure ou égale à une puissance maximale de réserve primaire (RP_max_bat) de ladite batterie (BAT), et dans lequel le modèle filtré dépend de règles prédéterminées et fonctions au moins du temps, lesdites règles comportant :

- lorsque l'écart de fréquence entre la fréquence (f) du réseau (RES) et la fréquence nominale (f0) du réseau (RES) dépasse un seuil de fréquence (f_seuil) à un instant t, la consigne de puissance transmise à la batterie (P_ref_bat) sélectionnée doit atteindre 50% de la puissance maximale de réserve primaire (RP_max_bat) de la batterie (BAT) au plus tard à un premier seuil de durée (t1_seuil) après l'instant t, et
- lorsque l'écart entre la fréquence (f) du réseau (RES) et la fréquence nominale (f0) du réseau (RES) dépasse le seuil de fréquence (f_seuil) à un instant t, la consigne de puissance transmise à la batterie (P_ref_bat) sélectionnée doit atteindre 100% de la puissance maximale de réserve primaire (RP_max_bat) de la batterie (BAT) au plus tard à un second seuil de durée (t2_seuil) après l'instant t,

et dans lequel la deuxième consigne de puissance (P_ref_filtré) calculée selon le modèle filtré répond à des tolérances en temps et en puissance que définissent lesdites règles prédéterminées.

**8.** Procédé selon les revendications précédentes, dans lequel le modèle filtré est défini par une fonction de filtrage d'ordre un **caractérisée par** une constante de temps T,
et dans lequel la seconde consigne de puissance (P_ref_filtré) est calculée à un instant donné à partir de l'image de la fréquence (f) du réseau (RES), mesurée audit instant donné par ladite fonction de filtrage, la deuxième vitesse de variation dans le temps de la seconde consigne de puissance (P_ref_filtré) dépendant ainsi de la constante de temps T de ladite fonction de filtrage.

**9.** Procédé selon les revendications précédentes, dans lequel le modèle de filtre est défini par une fonction de filtrage comportant une limitation de rampe, ladite fonction de filtrage étant **caractérisée par** une pente de raideur R,
et dans lequel la seconde consigne de puissance (P_ref_filtré) est calculée à un instant donné à partir de l'image de la fréquence (f) du réseau (RES), mesurée audit instant donné par ladite fonction de filtrage, la deuxième vitesse de variation dans le temps de la seconde consigne de puissance (P_ref_filtré) dépendant ainsi de la raideur R de la pente de ladite fonction de filtrage.

**10.** Procédé selon l'une des revendications 8 et 9, prises en combinaison avec la revendication 7, dans lequel ladite constante de temps T et/ou ladite raideur R de la pente sont déterminées de sorte que la seconde consigne de puissance (P_ref_filtré) réponde aux tolérances en temps et en puissance que définissent lesdites règles prédéterminées.

**11.** Dispositif de régulation (REG) de la puissance active (P_bat) d'une batterie (BAT) transmise à un réseau électrique (RES) pour une participation à un réglage primaire de fréquence dudit réseau (RES) par au moins ladite batterie (BAT), ledit dispositif comportant un circuit de traitement (PROC, MEM) agencé pour la mise en œuvre du procédé selon l'une des revendications précédentes.

**12.** Programme informatique comportant des instructions pour la mise en œuvre du procédé selon l'une des revendications 1 à 10 lorsque lesdites instructions sont exécutées par un processeur (PROC) d'un circuit de traitement (PROC, MEM).

[Fig. 1]

RES
EXPORT
CONS
DIST
GEST
TRANS
REGUL
MES.
IMPORT
PROD
P_ref_bat
P_ref_centr
BAT
CENTR.
EDR
REG
REGC
PROC
MEM

FIG. 1

[Fig. 2]

ΔP
$\Delta P_1$
t1 : 500ms
t (s)
t2 : 30s

FIG. 2

[Fig. 3]

meas. f
S1
calc. f_filtré
S11
S21
calc. P_ref_brut
calc. P_ref_filtré
S22
select.
P_ref_bat
S3
trans.
P_ref_bat
bat
S4

FIG. 3

[Fig. 4]

[Fig. 5]

ΔP
ΔP1
t (s)
Rb
Rf
t1 : 500ms
Tf1
Tf2
Tb1 ≅ Tb2
t2 : 30s
P_ref_brut
P_ref_filtré
FIG. 4

S30
S31
SOC > SOC_haut ?
NON
OUI
S32
SOC < SOC_bas ?
S311
P_ref_brut > P_ref_filtré ?
OUI
NON
NON
OUI
S321
P_ref_brut < P_ref_filtré ?
P_ref_bat = P_ref_brut
ou P_ref_filtré
P_ref_bat = P_ref_filtré
P_ref_bat = P_ref_brut
S3112
S3111
NON
OUI
S322
P_ref_bat = P_ref_filtré
P_ref_bat = P_ref_brut
S3211
S3212

FIG. 5

[Fig. 6]

S300
$P_{ref_brut} < 0$ ?
NON
OUI
S301
$P_{ref_brut} > 0$ ?
S3003
$P_{ref_brut} > P_{ref_filtré}$ ?
S3002
$P_{ref_brut} < P_{ref_filtré}$ ?
$P_{ref_bat} = 0$
S3001
S304
$P_{ref_filtré} > 0$ ?
S305
$P_{ref_bat} = P_{ref_brut}$
S303
$P_{ref_filtré} < 0$ ?
$P_{ref_bat} = P_{ref_brut}$
S302
$P_{ref_bat} = P_{ref_filtré}$
S3041
$P_{ref_bat} = 0$
S3042
$P_{ref_bat} = P_{ref_filtré}$
S3031
$P_{ref_bat} = 0$
S3032
S3000

FIG. 6

[Fig. 7]

P_ref_bat
P_ref_filtré
P_ref_brut
1
0.8
0.6
0.4
0.2
0
0
10
20
30
40
50
60
70
80
Fréquence (f)
50
49.95
49.9
49.85
49.8
Time (seconds)

FIG. 7

[Fig. 8]

0.6
0.4
0.2
0
-0.2
-0.4
P_ref_bat
P_ref_filtré
P_ref_brut
0
10
20
30
40
50
60
70
80
50
49.95
49.9
49.85
49.8
Fréquence (f)
Time (seconds)

FIG. 8

Europäisches Patentamt
European Patent Office
Office européen des brevets

# RAPPORT DE RECHERCHE EUROPEENNE

Numéro de la demande
EP 21 20 8097

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | US 2016/013676 A1 (KAJI MITSURU [JP] ET AL) 14 janvier 2016 (2016-01-14)<br>* figures 1,2,3A,3B,7 *<br>* alinéa [0057] *<br>* alinéa [0063] *<br>* alinéa [0066] *<br>* alinéa [0071] - alinéa [0075] *<br>* alinéa [0112] - alinéa [0123] *<br>* alinéa [0126] *<br>----- | 1,2,11, 12<br>3-10 | INV.<br>H02J3/32<br>H02J3/48 |
| A | WO 2013/068256 A1 (EVONIK INDUSTRIES AG [DE]; EVONIK DEGUSSA GMBH [DE] ET AL.) 16 mai 2013 (2013-05-16)<br>* figure 2 *<br>* page 18, ligne 16 - ligne 31 *<br>----- | 1-10 | |
| | | | DOMAINES TECHNIQUES RECHERCHES (IPC) |
| | | | H02J |

1 Le présent rapport a été établi pour toutes les revendications

| Lieu de la recherche | Date d'achèvement de la recherche | Examinateur |
|---|---|---|
| Munich | 22 décembre 2021 | Martin, Raynald |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 21 20 8097

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-12-2021

| Document brevet cité au rapport de recherche | Date de publication | Membre(s) de la famille de brevet(s) | Date de publication |
|---|---|---|---|
| US 2016013676 A1 | 14-01-2016 | JP 6183727 B2 | 23-08-2017 |
| | | JP WO2015075758 A1 | 16-03-2017 |
| | | SG 11201503507R A | 30-07-2015 |
| | | US 2016013676 A1 | 14-01-2016 |
| | | WO 2015075758 A1 | 28-05-2015 |
| WO 2013068256 A1 | 16-05-2013 | DE 102011055229 A1 | 16-05-2013 |
| | | EP 2777122 A1 | 17-09-2014 |
| | | US 2014327404 A1 | 06-11-2014 |
| | | WO 2013068256 A1 | 16-05-2013 |

EPO FORM P0460

Pour tout renseignement concernant cette annexe : voir Journal Officiel de l'Office européen des brevets, No.12/82